# EUROPEAN PATENT SPECIFICATION

(11) **EP 4 332 045 B1**
(45) Date of publication and mention of the grant of the patent: **30.04.2025**
(21) Application number: 22208646.4
(22) Date of filing: 21.11.2022
(51) Int. Cl.: B66B 7/06, D07B 1/06, D07B 1/14, D07B 1/16

(54) **ELEVATOR LOAD BEARING MEMBER WITH CONDUCTIVE ADHESIVE**
AUFZUGSLASTTRAGELEMENT MIT LEITFÄHIGEM KLEBSTOFF
ÉLÉMENT DE SUPPORT DE CHARGE D'ASCENSEUR AVEC ADHÉSIF CONDUCTEUR

(30) Priority: 02.09.2022 US 202217902409
(43) Date of publication of application: 06.03.2024
(73) Proprietor: OTIS Elevator Company, Farmington, CT 06032 (US)
(72) Inventor: GUILANI, Brad, Woodstock Valley, CT 06282 (US); BROWN, Ricardo, Farmington, CT 06032 (US)
(74) Representative: Dehns

(56) References cited:
- EP-A1- 1 350 886
- EP-A1- 1 555 233
- WO-A1-2012/039781
- IDUMAH CHRISTOPHER IGWE ED - PARK YUNG WOO: "Novel trends in conductive polymeric nanocomposites, and bionanocomposites", SYNTHETIC METALS, ELSEVIER SEQUOIA LAUSANNE, CH, vol. 273, 4 January 2021 (2021-01-04), XP086500775, ISSN: 0379-6779, [retrieved on 20210104], DOI: 10.1016/J.SYNTHMET.2020.116674

## Description

### BACKGROUND

A variety of elevator systems are known. Some elevator systems use a hydraulic arrangement for moving the elevator car. Others are traction-based and include roping that suspends the elevator car and a counterweight. A machine causes movement of a traction sheave that, in turn, causes movement of the roping for moving the elevator car as desired.

Advancements have been made in monitoring systems for monitoring the health of the elevator system. Some of these health monitoring systems utilize the roping, which is more generally a load-bearing member of the elevator system. Even with the advancement, those skilled in the art have been striving to improve elevator load bearing member technology.

EP 1 555 233 A1 provides an elevator rope with a belt-shaped rope main body, which has a plurality of strands and a coating body made of a resin for covering and integrating the strands.

EP 1 350 886 A1 relates to a synthetic rope formed from a strand of synthetic resin fibers and conductive fibers, in which the synthetic resin fibers are removed from an end portion, thereby exposing conductive resin, and conductive resin is integrated into a single body with conductive adhesive.

Christopher Igwe Idumah, Synthetic Metals 273 (2021) 116674, reports novel trends in conductive polymeric nanocomposites, and bionanocomposites.

### SUMMARY

An elevator load bearing member, e.g. an elevator bearing member made via the method herein described, among other possible things includes a plurality of wires, e.g. load bearing wires, a polymer-based conductive adhesive coating on each of the plurality of the wires, and a jacket surrounding the wires. The jacket is adhered to the wires by the polymer-based conductive adhesive coating.

In a further example of the foregoing, the polymer-based conductive adhesive comprises an intrinsically conductive polymer.

In a further example of any of the foregoing, the intrinsically conductive polymer includes at least one of polyacetylene (PA), polyaniline (PAni), polypyrrole (PPy), polythiophere (PTh), poly(3,4-ethylene-dioxythiophene), PEDOT, and poly(phenylvinylene) (PPV).

In a further example of any of the foregoing, the intrinsically conductive polymer is functionalized to facilitate the adhesion of the jacket to the wires.

In a further example of any of the foregoing, the polymer-based conductive adhesive includes a non-conductive polymer adhesive and a conductive element.

In a further example of any of the foregoing, the conductive element includes at least one of carbon nanotubes, graphene, and metal powder.

In a further example of any of the foregoing, the nonconductive polymer adhesive includes at least one of an epoxy, a urethane, or an acrylate.

In a further example of any of the foregoing, the polymer-based conductive element comprises less than about 5% by weight of the conductive element.

In a further example of any of the foregoing, the polymer-based conductive adhesive comprises less than about 5% by weight of the conductive element.

In a further example of any of the foregoing, the conductive element comprises between about 0.5% and about 1% by weight of the polymer-based conductive adhesive.

In a further example of any of the foregoing, an electrical conductivity of the polymer-based conductive adhesive is at least about 10 siemens.

In a further example of any of the foregoing, the plurality of load bearing wires are steel wires.

A method of making a load bearing member for an elevator system, e.g. an elevator load bearing member as herein described, among other possible things includes applying a polymer-based conductive adhesive coating onto a plurality of wires, e.g. load bearing wires, such that the polymer-based conductive adhesive facilitates electrical conduction between the wires, and surrounding the plurality of wires with a jacket, wherein the jacket is adhered to the wires by the polymer-based conductive adhesive.

In a further example of the foregoing, the polymer-based conductive adhesive comprises an intrinsically conductive polymer.

In a further example of any of the foregoing, the method also includes functionalizing the intrinsically conductive polymer to facilitate the adhesion of the jacket to the wires.

In a further example of any of the foregoing, the polymer-based conductive adhesive includes a non-conductive polymer adhesive and a conductive element.

In a further example of any of the foregoing, the conductive element includes at least one of carbon nanotubes, graphene, and metal powder.

In a further example of any of the foregoing, the polymer-based conductive element comprises less than about 5% by weight of the conductive element.

In a further example of any of the foregoing, the polymer-based conductive adhesive comprises less than about 5% by weight of the conductive element.

In a further example of any of the foregoing, the conductive element comprises between about 0.5% and about 1% by weight of the polymer-based conductive adhesive.

In a further example of any of the foregoing, an electrical conductivity of the polymer-based conductive adhesive is at least about 10 siemens.

In a further example of any of the foregoing, the plurality of wires are steel wires.

### BRIEF DESCRIPTION OF THE DRAWINGS

Figure 1 schematically illustrates selected portions of an elevator system including a load bearing member designed according to an embodiment of this invention.
Figure 2 schematically illustrates an example embodiment of an elevator load bearing member.

### DETAILED DESCRIPTION

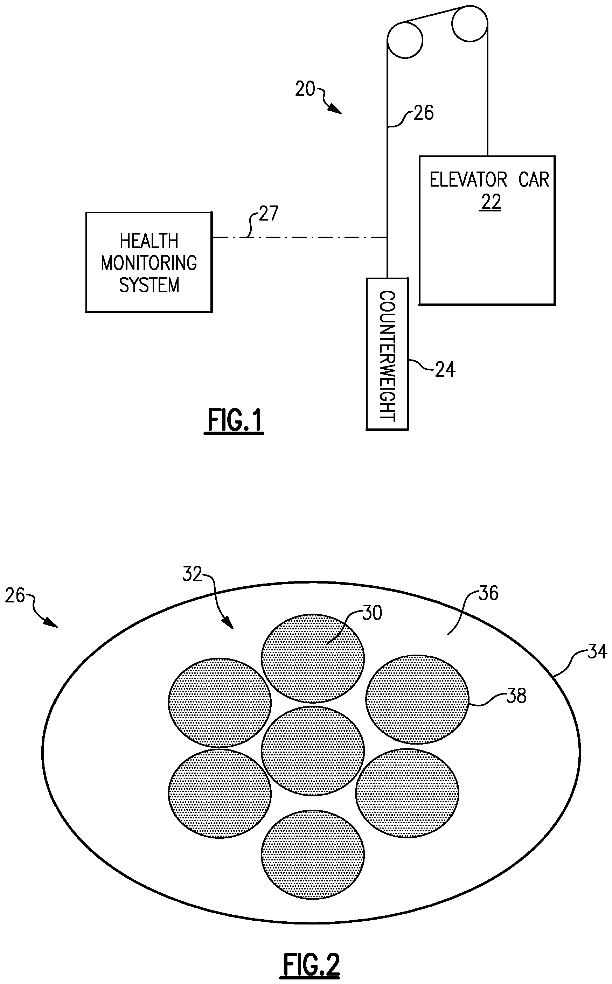

Figure 1 schematically shows selected portions of an elevator system 20. An elevator car 22 and counterweight 24 are suspended by a load bearing member 26. A traction sheave associated with a machine (not specifically illustrated) selectively controls movement of the load bearing member 26 to control the movement or position of the elevator car 22. For illustration purposes, a single load bearing member 26 is represented in Figure 1. Multiple load bearing members would be included in many embodiments.

Figure 2 schematically illustrates an example load bearing member 26 including a plurality of load bearing wires 30 arranged in a bundle 32. The wires 30 may be wrapped or twisted around one another within the bundle 32. Though one bundle 32 is shown in Figure 2, it should be understood that multiple bundles 32 could be used within the load bearing member 26. The bundles may be wrapped or twisted around one another to form one or more cords. The wires 30 may comprise a variety of materials that are useful for supporting the loads of the elevator system 20, such as steel or aluminum and alloys thereof. The bundle 32 is surrounded by a jacket 34.

The jacket 34 includes an inner portion or layer 36 that is received against the cords 30. The inner portion 36 comprises a compressible material such as polyurethane, polyamide, polyester, or ethylene propylene diene monomer rubber (EPDM), or combinations thereof.

With continued reference to Figure 1, the elevator system also includes a health monitoring system 27, schematically shown in Figure 1. The health monitoring system 27 monitors the health of the load bearing member 26. Such health monitoring systems are known in the art, but in general, the wires 30 in the load-bearing member 26 form a circuit. The health monitoring system 27 compares a resistance measured within the circuit to an expected resistance for the circuit. If there is a discrepancy between the measured and expected resistance, it could indicate a fault in the load bearing member 26.

Each of the wires 30 include a conductive adhesive coating 38. The conductive adhesive coating 38 adheres the wires 30 to one another and to the inner layer 36 of the jacket 34. Adequate adhesion is particularly important between the wires 30 and the jacket 34 to maintain the integrity of the load-bearing member 26 and prevent the wires 30 from debonding and/or pulling out from the jacket 34 and maintain the required tensile strength for the loadbearing member 26.

The conductive adhesive coating 38 also facilitates formation of the circuit discussed above for the health monitoring system 27. In other words, the conductive adhesive coating 38 facilitates electrical conduction between the individual wires 30. In general, the conductive adhesive coating 38 has an electrical conductivity of at least 10 siemens.

The conductive adhesive coating 38 may also provide corrosion protection to the wires 30, in some examples.

The conductive adhesive coating 38 is a polymer-based adhesive coating with a conductive element. In one example, the conductive adhesive coating 38 comprises a polymer that is intrinsically conductive, such as polyacetylene (PA), polyaniline (PAni), polypyrrole (PPy), polythiophere (PTh), poly(3,4-ethylene-dioxythiophene), PEDOT, or poly(phenylvinylene) (PPV). That is, the intrinsically conductive polymer is itself the conductive element in this example. The intrinsically conductive polymer can be applied to the wires 30 by any suitable method such as painting, spraying, dipping, etc.

In some examples, the intrinsically conductive polymer is functionalized according to any known method to improve its adhesive properties.

In another example the conductive adhesive coating 38 is polymeric composite material that includes a non-conductive polymeric adhesive and a conductive element. Polymer composites are well known in the art and the composite can be made by any suitable method of combining the non-conductive polymeric adhesive with the conductive element. Any known non-conductive polymeric adhesive such as epoxies, urethanes, or acrylates could be used.

Likewise, any suitable conductive elements, such as carbon nanotubes, graphene, or metal powder could be used. In a particular example, the polymeric composite material (e.g. the polymer-based conductive adhesive) comprises less than about 5% by weight of the conductive element. In a more particular example the polymeric composite material (e.g. the polymer-based conductive adhesive) comprises between about 0.5% and about 1% by weight of the conductive element. In this way, the mechanical and adhesive properties of the conductive adhesive coating 38 are substantially the same as the properties of the non-conductive polymer adhesive. In other words, the addition of the conductive element does not substantially change the mechanical and adhesive properties of the non-conductive polymer adhesive.

As used herein, the term "about" has the typical meaning in the art, however in a particular example "about" can mean deviations of up to 10% of the values described herein.

## Claims

1. An elevator load bearing member (26), comprising a plurality of load bearing wires (30), **characterized by**:
a polymer-based conductive adhesive coating (38) on each of the plurality of the wires (30); and
a jacket (34) surrounding the wires, wherein the jacket (34) is adhered to the wires (30) by the polymer-based conductive adhesive coating (38).

2. The elevator load bearing member (26) of claim 1, wherein the polymer-based conductive adhesive (38) comprises an intrinsically conductive polymer, said intrinsically conductive polymer optionally being functionalized to facilitate the adhesion of the jacket (34) to the wires (30).

3. The elevator load bearing member (26) of claim 1 or claim 2, wherein the intrinsically conductive polymer includes at least one of polyacetylene (PA), polyaniline (PAni), polypyrrole (PPy), polythiophere (PTh), poly(3,4-ethylene-dioxythiophene), PEDOT, and poly(phenylvinylene) (PPV).

4. The elevator load bearing member (26) of any one of claims 1 to 3, wherein the polymer-based conductive adhesive (38) includes;
a non-conductive polymer adhesive, wherein said non-conductive polymer adhesive optionally includes at least one of an epoxy, a urethane, or an acrylate; and
a conductive element, wherein said conductive element optionally includes at least one of carbon nanotubes, graphene, and metal powder.

5. The elevator load bearing member (26) of claim 4, wherein the polymer-based conductive element comprises less than about 5% by weight of the conductive element.

6. The elevator load bearing member (26) of claim 4 or claim 5, wherein the conductive element comprises between about 0.5% and about 1% by weight of the polymer-based conductive adhesive.

7. The elevator load bearing member (26) of any one of claims 1 to 6, wherein an electrical conductivity of the polymer-based conductive adhesive (38) is at least about 10 siemens.

8. The elevator load bearing member (26) of any one of claims 1 to 7, wherein the plurality of load bearing wires (30) are steel wires.

9. A method of making a load bearing member (26) for an elevator system (20), comprising:
applying a polymer-based conductive adhesive coating (38) onto a plurality of wires (30) such that the polymer-based conductive adhesive (38) facilitates electrical conduction between the wires (30); and
surrounding the plurality of wires (30) with a jacket (34), wherein the jacket (34) is adhered to the wires (30) by the polymer-based conductive adhesive (38).

10. The method of claim 9, wherein the polymer-based conductive adhesive (38) comprises an intrinsically conductive polymer, said method optionally further comprising functionalizing the intrinsically conductive polymer to facilitate the adhesion of the jacket (34) to the wires (30).

11. The method of claim 9 or claim 10, wherein the polymer-based conductive adhesive (38) includes a non-conductive polymer adhesive and a conductive element, wherein said conductive element optionally includes at least one of carbon nanotubes, graphene, and metal powder.

12. The method of claim 11, wherein the polymer-based conductive element comprises less than about 5% by weight of the conductive element.

13. The method of claim 11 or claim 12, wherein the conductive element comprises between about 0.5% and about 1% by weight of the polymer-based conductive adhesive.

14. The method of any one of claims 9 to 13, wherein an electrical conductivity of the polymer-based conductive adhesive (38) is at least about 10 siemens.

15. The method of any one of claims 9 to 14, wherein the plurality of wires (30) are steel wires.

## Patentansprüche

1. Aufzugslasttrageelement (26), umfassend eine Vielzahl Lasttrageseilen (30), **gekennzeichnet durch**:
eine polymerbasierte leitfähige Klebstoffbeschichtung (38) auf jedem der Vielzahl von Seilen (30); und
eine Ummantelung (34), welche die Seile umgibt, wobei die Ummantelung (34) durch die polymerbasierte leitfähige Klebstoffbeschichtung (38) an die Seile (30) geklebt ist.

2. Aufzugslasttrageelement (26) nach Anspruch 1, wobei der polymerbasierte leitfähige Klebstoff (38) ein intrinsisch leitfähiges Polymer umfasst und das intrinsisch leitfähige Polymer optional funktionalisiert ist, um das Kleben der Ummantelung (34) an den Seilen (30) zu begünstigen.

3. Aufzugslasttrageelement (26) nach Anspruch 1 oder Anspruch 2, wobei das intrinsisch leitfähige Polymer mindestens eines von Polyacetylen (PA), Polyanilin (PAni), Polypyrrol (PPy), Polythiophen (PTh), Poly(3,4-ethylen-dioxythiophen), PEDOT und Poly(phenylvinylen) (PPV) beinhaltet.

4. Aufzugslasttrageelement (26) nach einem der Ansprüche 1 bis 3, wobei der polymerbasierte leitfähige Klebstoff (38) Folgendes beinhaltet:
einen nicht leitfähigen Polymerklebstoff, wobei der nicht leitfähige Polymerklebstoff optional mindestens eines von einem Epoxid, einem Urethan oder einem Acrylat beinhaltet; und
ein leitfähiges Bauteil, wobei das leitfähige Bauteil optional mindestens eines von Kohlenstoffnanoröhren, Graphen und Metallpulver beinhaltet.

5. Aufzugslasttrageelement (26) nach Anspruch 4, wobei das polymerbasierte leitfähige Bauteil weniger als etwa 5 Gew.-% des leitfähigen Bauteils umfasst.

6. Aufzugslasttrageelement (26) nach Anspruch 4 oder Anspruch 5, wobei das leitfähige Bauteil zwischen etwa 0,5 Gew.-% und etwa 1 Gew.-% des polymerbasierten leitfähigen Klebstoffs umfasst.

7. Aufzugslasttrageelement (26) nach einem der Ansprüche 1 bis 6, wobei eine elektrische Leitfähigkeit des polymerbasierten leitfähigen Klebstoffs (38) mindestens 10 Siemens beträgt.

8. Aufzugslasttrageelement (26) nach einem der Ansprüche 1 bis 7, wobei es sich bei der Vielzahl von Lasttrageseilen (30) um Stahlseile handelt.

9. Verfahren zum Herstellen eines Aufzugslasttrageelements (26) für ein Aufzugssystem (20), umfassend:
Aufbringen einer polymerbasierten leitfähigen Klebstoffbeschichtung (38) auf eine Vielzahl von Seilen (30), sodass der polymerbasierte leitfähige Klebstoff (38) elektrisches Leiten zwischen den Seilen (30) begünstigt; und
Umgeben der Vielzahl von Seilen (30) mit einer Ummantelung (34), wobei die Ummantelung (34) durch die polymerbasierte leitfähige Klebstoffbeschichtung (38) an die Seile (30) geklebt wird.

10. Verfahren nach Anspruch 9, wobei der polymerbasierte leitfähige Klebstoff (38) ein intrinsisch leitfähiges Polymer umfasst und optional das Verfahren ferner Funktionalisieren des intrinsisch leitfähigen Polymers, um das Kleben der Ummantelung (34) an den Seilen (30) zu begünstigen, umfasst.

11. Verfahren nach Anspruch 9 oder Anspruch 10, wobei der polymerbasierte leitfähige Klebstoff (38) einen nicht leitfähigen Polymerklebstoff und ein leitfähiges Bauteil beinhaltet, wobei das leitfähige Bauteil optional mindestens eines von Kohlenstoffnanoröhren, Graphen und Metallpulver beinhaltet.

12. Verfahren nach Anspruch 11, wobei das polymerbasierte leitfähige Bauteil weniger als etwa 5 Gew.-% des leitfähigen Bauteils umfasst.

13. Verfahren nach Anspruch 11 oder Anspruch 12, wobei das leitfähige Bauteil zwischen etwa 0,5 Gew.-% und etwa 1 Gew.-% des polymerbasierten leitfähigen Klebstoffs umfasst.

14. Verfahren nach einem der Ansprüche 9 bis 13, wobei eine elektrische Leitfähigkeit des polymerbasierten leitfähigen Klebstoffs (38) mindestens 10 Siemens beträgt.

15. Das Verfahren nach einem der Ansprüche 9 bis 14, wobei es sich bei der Vielzahl von Seilen (30) um Stahlseile handelt.

## Revendications

1. Élément de support de charge d'ascenseur (26), comprenant une pluralité de fils de support de charge (30), **caractérisé par** :
un revêtement adhésif conducteur à base de polymère (38) sur chacun des fils de la pluralité de fils (30) ; et
une gaine (34) entourant les fils, la gaine (34) étant collée aux fils (30) par le revêtement adhésif conducteur à base de polymère (38).

2. Élément de support de charge d'ascenseur (26) selon la revendication 1, dans lequel l'adhésif conducteur à base de polymère (38) comprend un polymère intrinsèquement conducteur, ledit polymère intrinsèquement conducteur étant éventuellement fonctionnalisé pour faciliter l'adhérence de la gaine (34) aux fils (30).

3. Élément de support de charge d'ascenseur (26) selon la revendication 1 ou la revendication 2, dans lequel le polymère intrinsèquement conducteur comprend au moins l'un parmi le polyacétylène (PA), la polyaniline (PAni), le polypyrrole (PPy), le polythiophène (PTh), le poly(3,4-éthylène-dioxythiophène), le PEDOT et le poly(phénylvinylène) (PPV).

4. Élément de support de charge d'ascenseur (26) selon l'une quelconque des revendications 1 à 3, dans lequel l'adhésif conducteur à base de polymère (38) comprend ;
un adhésif polymère non conducteur, ledit adhésif polymère non conducteur comprenant éventuellement au moins un époxy, un uréthane ou un acrylate ; et
un élément conducteur, dans lequel ledit élément conducteur comprend éventuellement au moins l'un des nanotubes de carbone, du graphène et de la poudre métallique.

5. Élément de support de charge d'ascenseur (26) selon la revendication 4, dans lequel l'élément conducteur à base de polymère comprend moins d'environ 5 % en poids de l'élément conducteur.

6. Élément de support de charge d'ascenseur (26) selon la revendication 4 ou 5, dans lequel l'élément conducteur comprend environ entre 0,5 % et environ 1 % en poids de l'adhésif conducteur à base de polymère.

7. Élément de support de charge d'ascenseur (26) selon l'une quelconque des revendications 1 à 6, dans lequel la conductivité électrique de l'adhésif conducteur à base de polymère (38) est d'au moins environ 10 siemens.

8. Élément de support de charge d'ascenseur (26) selon l'une quelconque des revendications 1 à 7, dans lequel la pluralité de fils de support de charge (30) sont des fils d'acier.

9. Procédé de fabrication d'un élément de support de charge (26) pour un système d'ascenseur (20), comprenant :
l'application d'un revêtement adhésif conducteur à base de polymère (38) sur une pluralité de fils (30) de telle sorte que l'adhésif conducteur à base de polymère (38) facilite la conduction électrique entre les fils (30) ; et
l'enrobage de la pluralité de fils (30) avec une gaine (34), dans laquelle la gaine (34) est collée aux fils (30) par l'adhésif conducteur à base de polymère (38).

10. Procédé selon la revendication 9, dans lequel l'adhésif conducteur à base de polymère (38) comprend un polymère intrinsèquement conducteur, ledit procédé comprenant en outre éventuellement la fonctionnalisation du polymère intrinsèquement conducteur pour faciliter l'adhérence de la gaine (34) aux fils (30).

11. Procédé selon la revendication 9 ou la revendication 10, dans lequel l'adhésif conducteur à base de polymère (38) comprend un adhésif polymère non conducteur et un élément conducteur, ledit élément conducteur comprenant éventuellement au moins l'un des nanotubes de carbone, du graphène et de la poudre métallique.

12. Procédé selon la revendication 11, dans lequel l'élément conducteur à base de polymère comprend moins d'environ 5 % en poids de l'élément conducteur.

13. Procédé selon la revendication 11 ou 12, dans lequel l'élément conducteur comprend environ entre 0,5 % et environ 1 % en poids de l'adhésif conducteur à base de polymère.

14. Procédé selon l'une quelconque des revendications 9 à 13, dans lequel la conductivité électrique de l'adhésif conducteur à base de polymère (38) est d'au moins environ 10 siemens.

15. Procédé selon l'une quelconque des revendications 9 à 14, dans lequel la pluralité de fils (30) sont des fils d'acier.
